# EUROPEAN PATENT APPLICATION

(11) **EP 3 009 012 A1**
(43) Date of publication of application: **20.04.2016**
(21) Application number: 14810328.6
(22) Date of filing: 08.01.2014
(51) Int. Cl.: A23L 33/10, C12P 19/22, C13K 7/00

(54) **SWEET POTATO SYRUP AND PROCESS FOR PRODUCING SWEET POTATO SYRUP**

(30) Priority: 13.06.2013 JP 2013125099
(71) Applicant: Kagaya, Mitsuo, Tokyo 162-0818 (JP)
(72) Inventor: YAMAKAWA Osamu, Kawagoe-shi Saitama 351-1175 (JP); YOSHIMOTO Makoto, Kagoshima-shi Kagoshima 890-0084 (JP); BEPPU Hirokazu, Minami-Kyusyu-shi Kagoshima 891-0705 (JP)
(74) Representative: Gill, David Alan
(86) International application number: PCT/JP2014/050609
(87) International publication number: WO 2014/199651

(57) **Abstract**

In order to provide sweetpotato condensed extract (that is imo-mitsu) as a dietary supplement having a feeling of high quality with emphasis on nutritional functionality, which is obtained from sweetpotato, does not have extraneous flavors or odor of malt, and also improve taste and flavor enables the setting of a long periods for consumption and storage, a method for producing a imo-mitsu composition adds β-amylase contained in liquid from squeezing sweetpotato or from sweetpotato dry powder as saccharifying enzyme to a raw ingredient derived from sweetpotato by adding water and heating processing, and performs saccharification processing by heating at 60 to 75°C for 30 to 60 minutes.

## Description

### Field of Art

The present invention relates to a sweetpotato condensed extract and a method for producing imo-mitsu, and particularly imo-mitsu and a method for manufacturing imo-mitsu as a dietary supplement having a feeling of high quality with improved nutritional functionality, which is obtained from sweetpotato, does not have extraneous flavors or odor of malt or the like, has a superior subjective characteristics, such as color, flavor, and aroma, and enables the setting of a long periods for consumption and storage.

### Background Art

In a conventional method for producing imo-mitsu from sweetpotato, for example, in Ei and Chiran regions of the Southern Satsuma Peninsula, imo-mitsu has been produced to put on rice cakes with mugwort as a limited seasonable favorite, and is mostly sold in those regions with the local name of "Amendoro".

Imo-mitsu product called "Amendoro" conventionally has sweetpotato as the main raw ingredient, and the kinds of raw ingredient sweetpotato used therein and cultivated in the local area, are limited to the sweetpotato variety, for example, *Koganesengan* and *Shiroyutaka* or the like, and further, the method of producing this "Amendoro" product having been that of adding malt and water to steamed sweetpotato.

To describe a general example of the method for producing conventional imo-mitsu, the first process step is to stew or steam raw sweetpotato, and then add water to obtain a slurry-like liquid.

After that, as the second process step, the malt (contained β-amylase) is added to the liquid, which is kept at approximately 50°C to 60°C for approximately 1 hour to perform saccharification processing.

Next, as the third process step, after the saccharification processing, the liquid is squeezed under pressure (squeezing processing), and the processing ingredient of sweetpotato is obtained.

Continuing, as the fourth process step, this processing ingredient is concentrated by heating for approximately 2 to 3 hours to complete the production of sweetpotato condensed extract (that is imo-mitsu).

In imo-mitsu produced by the above-noted method, because the method used is that of adding malt and sometimes diluted with starch-saccharified syrup ( mizuame) to be imo-mitsu on the shelves of stores, extraneous flavors and the odor of malt caused by the malt remain in the final product, this representing the cause of a loss in quality of taste or the flavor of imo-mitsu itself.

Additionally, in the above-noted conventional art for producing imo-mitsu , because malt is used in the saccharification process, it is necessary to set the saccharification processing temperature to 60°C or lower in order to maintain the activity of the malt-derived enzymes. As a result, there is a tendency for unwanted microorganisms to breed, which can cause spoilage, such as mold or bacteria, in the saccharification and squeezing processes, and unless there is thorough prevention of spoilage in the imo-mitsu product, quality control problems and storability problems occur in the imo-mitsu product.

In addition, although there is a patent reference, Patent No. 4570067 (Patent Reference 1), which is related to the present invention, the patent reference discloses a method for producing β-amylase and, as one example, indicates a method for producing β-amylase from sweetpotato,But it neither discloses nor suggests any method for producing sweetpotato condensed extract (that is, imo-mitsu) by using the β-amylase in sweetpotato itself.

### Prior Art References

### Patent Reference

Patent Reference 1: Patent No. 4570067

### Summary of the Invention

### Problem to Be Solved by the Invention

Accordingly, an object of the present invention is to provide sweetpotato condensed extract that improves the faults of the above-noted conventional art and has only sweetpotato as a raw ingredient, with no unwanted flavors and odor from malt, superior transparency, and also in which saccharification processing is done at not only a higher temperature but also in a shorter time than conventionally, enabling a shortening of the work process and reduction of the production cost. In addition, because intrusion of unwanted microorganisms that cause spoilage by mold and bacteria does not occur, the present invention provides imo-mitsu, having sweetpotato as the raw ingredient, as dietary supplement enabling the setting of a long period for consumption and storage and having a feeling of high quality with emphasis on nutritional functionality.

### Means for Solving the Problem

In order to achieve the above-noted object, the present invention basically adopts the following technical constitution.

Specifically, a first aspect of the present invention is basically a imo-mitsu composition made only of sweetpotato components and not including malt components, and further, the imo-mitsu composition of the present invention has a Brix value Z of 65 to 85%, and also having fructose, glucose, sucrose, and maltose in the contained proportions of, respectively, 0.5 to 1.5%, 0.5 to 1.5%, 25 to 35%, and 65 to 75%.

A second aspect of the present invention is basically a method for producing a imo-mitsu composition, characterized by adding water to stewed or steamed sweetpotato and heating to obtain sweetpotato processed ingredient derived processed substance, and then, β-amylase separately obtained from liquid squeezed from sweetpotato itself or sweetpotato dry powder is added to the sweetpotato thus obtained, as a saccharifying enzyme, and which is subject to saccharification processing, being heated to 60 to 75°C for 30 to 60 minutes.

That is, a particular feature of the present invention is saccharification using starch saccharification enzyme included originally in sweetpotato.

### Effect of the Invention

By adopting the above-noted technical constitution, the present invention can provide imo-mitsu that improves the faults of the conventional art that uses malt and which has sweetpotato as a raw ingredient, with no unwanted flavors and odor from malt, superior transparency, and texture in the mouth and also in which saccharification processing is done at not only a higher temperature but also in a shorter time than conventionally, enabling a shortening of the work process, and because of an exclusion of unwanted microorganisms, the present invention provides imo-mitsu, composing only sweetpotato as the raw ingredient, and therefore, imo-mitsu can be dietary supplement enabling the setting of a long periods for consumption and storage and having a feeling of high quality with emphasis on nutritional functionality.

### Brief Description of the Drawings

FIG. 1 shows the experimental results when the transparency of imo-mitsu according to the present invention was compared with that of imo-mitsu produced by the conventional method.
FIG. 2 shows the experimental results when the resistance to heat of a β-amylase enzyme according to the present invention was compared with the resistance to heat of a malt enzyme.
FIG. 3 shows the experimental results when the relationship of enzyme activity with reaction time of β-amylase according to the present invention were compared with the relationship of enzyme activity with reaction time of malt.
FIG. 4 shows the experimental results when a comparison was done to compare the relationship between enzyme activity and reaction temperature of β-amylase according to the present invention.
FIG. 5 shows the results regarding subjective testing regarding the imo-mitsu according to the present invention and imo-mitsu manufactured by the conventional method.

### Embodiments

The constitution of a specific example of a method for producing an imo-mitsu obtained from sweetpotato according to the present invention will be described in detail below.

Specifically, the method for producing imo-mitsu obtained from sweetpotato according to the present invention is basically, as noted above, the method of adding water to sweetpotato and heating to obtain a sweetpotato derived processed substance, and further the method of adding β-amylase obtained from liquid squeezed from sweetpotato or sweetpotato dry powder to such sweetpotato derived processed substance, as a saccharifying enzyme, and subjecting the same to saccharification processing, being heated to 60 to 75°C for 30 to 60 minutes.

The sweetpotato used as the raw ingredient in the present invention are not particularly limited regarding type or shape, and it is possible to use almost all presently known sweetpotato as the raw ingredient.

Also, the β-amylase added to the sweetpotato used as the raw ingredient is also contained in sweetpotato, and the sweetpotato for extracting the β-amylase are not particularly limited regarding type of shape, and it is possible to use almost all presently known sweetpotato.

The inventors, as a result of actively studying a method for producing imo-mitsu as a dietary supplement placing emphasis on a feeling of high quality with improved nutritional functionality, which is imo-mitsu obtained from sweetpotato as the raw ingredient, does not have extraneous flavors or odor of malt, has a superior transparency and an excellent feeling in mouth, and enables the setting of a long periods for consumption and storage by shortening the work process, learned that, by not using malt to saccharify the starch or *mizu ame* to increase volume as was generally done in conventional methods for producing imo-mitsu, and by using separately prepared β-amylase contained in sweetpotato as a saccharifying enzyme for sweetpotato used as the raw ingredients, it is possible to produce imo-mitsu from sweetpotato.

In the present invention, additionally, as a result of various experiments and investigations, it was learned that it is possible to promote the saccharification effect by adding β-amylase separately obtained from liquid squeezed from sweetpotato or sweetpotato dry powder as a saccharifying enzyme to a sweet potato derived processed substance obtained by adding water to and heating sweetpotato, and it was possible to verify that there was an improvement in taste and flavor. In particular, as β-amylase obtained from sweetpotato, it is preferable to use β-amylase that is not refined, which can be widely used in lieu of the conventionally used refined β-amylase.

Additionally, it was learned that, according to the method for producing imo-mitsu from sweetpotato of the present invention, because malt, which has always been used in conventional methods for producing imo-mitsu, is not used, it is possible to perform saccharifiction processing at high temperatures of 60 to 75°C, which would not have been expected in the conventional art and it is also discovered that the saccharification can be completed in 30 to 60 minutes, the time required for saccharification is shortened in comparison to that of the conventional method. Preferably the processing time can be halved, this being not only economical, but also enabling the suppression of the breeding of spoilage by mold and bacteria during production of the imo-mitsu, thereby improving the taste and flavor of the imo-mitsu product itself and enabling the consumption period and storage period to be extended.

In the present invention, in addition to being able to expect the economic improvement by the shortening of the work process as noted above, there is the advantage of being able to use off-quality sweetpotato (called as B-class product), which have previously been discarded, as the raw potateo ingredient for the saccharifying enzyme.

In addition, according to the present invention, because it is possible to produce sweetpotato condensed extract with only sweetpotato raw ingredients made by local businesses, without using malt that has conventionally relied largely on imports, the contribution to the vitalization of local industry is great.

Although a specific example of the method for producing imo-mitsu from sweetpotato according to the present invention is shown below, the method of the present invention is not specified by this specific example.

Specifically, for example, β-amylase extracted from sweetpotato and the like is added as saccharifying enzyme to a raw ingredient derived from sweetpotato obtained by stewing or steaming sweetpotato to heat the sweetpotato with water added (alternatively, sweetpotato dry powder to which water has been added may be used), and this is treated by heating at 60 to 75°C for 30 to 60 minutes to perform saccharification processing.

As noted above, a feature of the present invention is that it uses no malt at all.

The components of the imo-mitsu composition produced by the method for producing imo-mitsu in the present invention as noted above, upon detailed analysis using DNA testing and liquid chromatographic measurements and the like, reveal that imo-mitsu composition has a Brix value Z is 65 to 85%, and fructose, glucose, sucrose, and maltose content in the contained proportions of, respectively, 0.5 to 1.5%, 0.5 to 1.5%, 25 to 35%, and 65 to 75%.

With regard to each of the above-noted compositions, not only does DNA testing clearly identify the origin of the raw ingredients, but testing by liquid high performance chromatography or the like can easily recognize the Brix value Z and the included proportion of, fructose, glucose, sucrose, and maltose or the like.

Next, an embodiment of the method for producing imo-mitsu according the above-noted present invention will be described.

Specifically, 160 kg of *Kogane sengan* is used as the raw ingredient, this being steam stewed for approximately 1 hours, after which 75 liters of water is added to make a muddy slurry.

After that, β-amylase obtained from *beniharuka* is added to the liquid being in the condition of muddy slurry , which is heated for 30 minutes at 65°C, pressure being applied to the resulting solution to squeeze out and obtain the raw ingredient of imo-mitsu.

Next, the i raw ingredient of mo-mitsu is concentrated by heating for approximately 2 hours, to obtain the imo-mitsu product.

As a result of analyzing the constituent components of the imo-mitsu according to the present invention obtained in this manner, was found that the Brix value Z was 75%, and also that the contained proportions of fructose, glucose, sucrose, and maltose were, respectively, 1%, 1%, 29%, and 69%.

The inventors of the present invention were able to verify, as a result of repeated experiments, that the above-noted characteristic values of the imo-mitsu according to the present invention varied within the ranges noted above between the type of sweetpotato, the time of harvesting the sweetpotato, and the amount of time the sweetpotato were stored.

Regarding the sweetpotato used as a raw ingredient in the present invention, there is no restriction to the sweetpotato noted in the above-described embodiment and, of course, any potatoes called sweetpotato may be used. Additionally, the β-amylase used in the present invention is not limited to being obtained from *Beniharuka,* and of course can be obtained from any sweetpotatoes called *Satumaimo.*

A characteristic technical feature of the present invention is that it is possible to use purple sweetpotato that contain a large amount of polyphenol or varieties that contain a large amount of β-carotene, which have not conventionally been used for imo-mitsu.

Additionally, because polyphenol and β-carotene, after being taken into the body, function as an anti-oxidant to detoxify reactive oxygen, the product is hopeful as a health food that can be expected to suppress aging and conditions such as cancer, diabetes, and hypertension caused by reactive oxygen.

Additionally, whereas the use of β-amylase in its pure form after refining was generally done in the conventional art, in the present invention, it was learned that a low-cost imo-mitsu can be easily obtained by using β-amylase in its unrefined form.

Because the imo-mitsu obtained from sweetpotato by the method for producing imo-mitsu of the present invention as noted above, uses sweetpotato for all the raw ingredients and uses no malt components at all, there are no unwanted tastes or odors of malt, and it is possible not only to improve the taste and flavor of the imo-mitsu product itself, but to extend the consumption period and storage period.

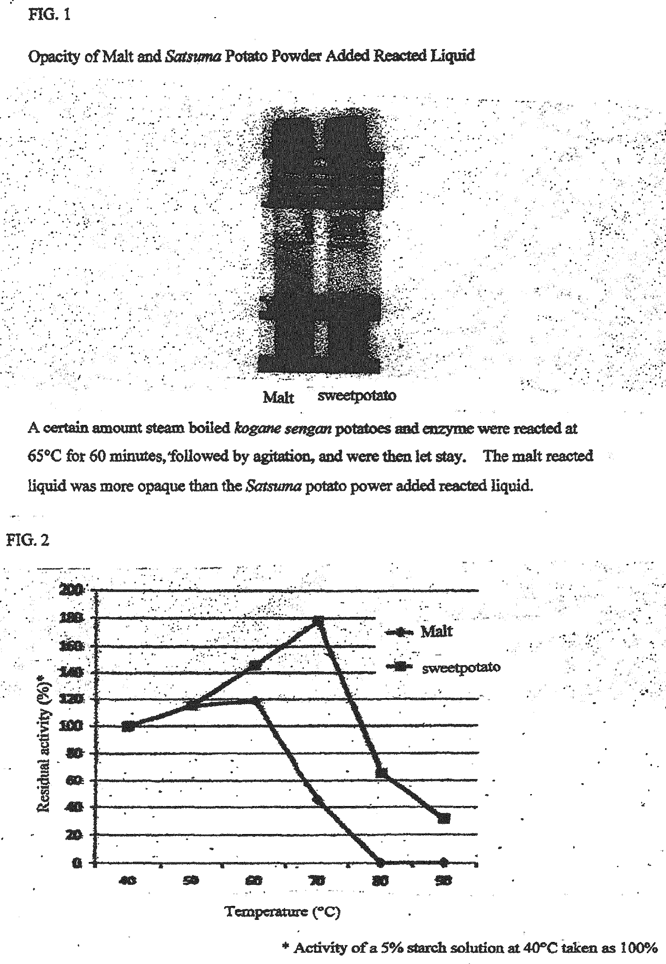

Additionally, as shown in FIG. 1, imo-mitsu of the present invention has superior transparency, is product that offers a feeling of high quality, with a smooth texture and no roughness in the mouth.

That is, FIG. 1 compares the opacity of imo-mitsu obtained by the present invention with that of imo-mitsu obtained using malt as the saccharifying enzyme by the conventional method, in which each imo-mitsu was placed in a transparent tube and the condition of light passage therethrough was captured as a photo of its outer appearance.

As can be seen from FIG. 1, whereas because of the large amount of precipitate particles remaining in the imo-mitsu obtained using malt as the saccharifying enzyme by the conventional method, the precipitate particles block the passage of light, in the case of the imo-mitsu obtained by the present invention, because there are few solids to precipitate, it is possible to achieve transparency.

Also, as noted above, because in the imo-mitsu according to the present invention saccharification is done at 65 to 75°C, intrusion and breeding of unwanted microorganisms such as mold and bacteria that cause spoilage in the saccharification processing of cooked sweetpotato the potatoes is prevented, and also it is possible to extend the storage period and consumption limit, while improving the taste and flavor of the composition.

In the present invention, as the principle of conception of the technical constitution that uses β-amylase included in sweetpotato in lieu of malt as the saccharifying enzyme, as shown in FIG. 2, when using malt as the saccharifying enzyme, when the temperature exceeds 60°C, the residual activity of the saccharifying enzyme decreases suddenly from a maximum of 120% and the glucose generation effect deteriorates, making it necessary to set the heating temperature of the saccharifiction process to 60°C or lower. As a result, it is not possible to completely prevent the intrusion and breeding of unwanted microorganisms, so that there was the problem of a shortening of the consumption period and storage period as imo-mitsu. In contrast, in the case of using β-amylase included in sweetpotato in lieu of malt as the saccharifying enzyme, such as is done in the present invention, even at a temperature exceeding 60°C the residual activity of the saccharifying enzyme still increases, and the residual activity of the saccharifying enzyme is clearly is a maximum of 180% at 70°C. Additionally, this indicates that even if the heating temperature for saccharification processing is 75°C, the residual activity of the saccharifying enzyme can still be maintained higher than the case of the heating temperature being 60°C for saccharification using malt.

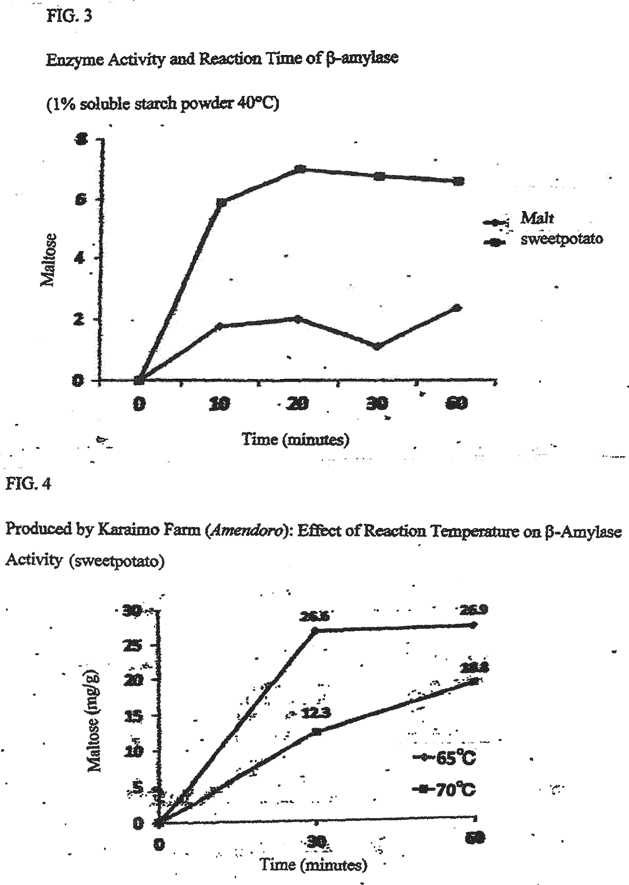

In the same manner, in the case of using malt as the saccharifying enzyme and the case of using β-amylase contained in sweetpotato as the saccharifying enzyme are subjected to an comparative investigation with the heating processing temperature for saccharification processing set to 40°C, looking at the amount of refined maltose produced (mg/g) varying the processing time from 10 minutes to 60 minutes, the results are as shown in FIG. 3. From these results, it is clear that, relative to the case of using malt, the case of using β-amylase extracted from sweetpotato shows a significantly superior amount of maltose produced.

Additionally, as shown in FIG. 4, in the present invention, in the case of using β-amylase extracted from sweetpotato, the result of a comparative investigation of the difference in the effect by the saccharification processing time with the heating processing temperature for the saccharification process set at 65°C and set at 70°C by looking at the amount of refined maltose produced (mg/g), in the case in which the heating temperature of the saccharification process was set to 70°C, a gradual increasing trend is exhibited between the processing times of 30 minutes and 60 minutes, and there was a significant decrease in comparison with the amount of maltose produced (mg/g) for the case in which the heating temperature of the saccharification process was set to 65°C. In contrast, in the case in which the heating processing temperature for the saccharifiction process is set to 65°C, the amount of maltose produced (mg/g) is approximately double that of the case in which the heating processing temperature is set to 70°C for the processing time of 30 minutes, after which the saturated state is reached, and even if processing is done for 60 minutes, the value is almost the same.

Therefore, it can be seen that the results indicate that, in the present invention, it is preferable that the heating processing temperature for the saccharification process be set to 65°C and the saccharification processing time be set to 30 minutes.

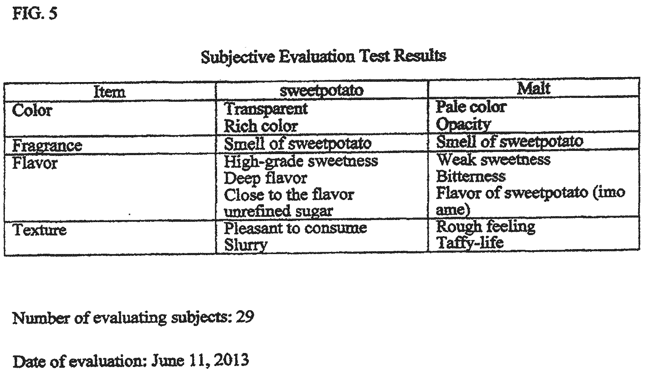

FIG. 5 shows the results of subjective evaluation testing, using a plurality of consumers as subjects, regarding the differences in quality characteristics between the imo-mitsu of the present invention and that of the conventional method, that is, imo-mitsu obtained using malt as the saccharifying enzyme.

As is clear from FIG. 5, the results indicate that the consumer evaluation of the imo-mitsu of the present invention is quite a bit higher than that of conventional sweetpotato condensed extract.

## Claims

1. An imo-mitsu composition **characterized by** being made of only sweetpotato components and not including malt components.

2. The imo-mitsu composition according to claim 1, **characterized by** processing by heating to 60 to 75°C.

3. A method for producing a imo-mitsu composition **characterized by** adding β-amylase obtained by squeezing liquid from sweetpotato or obtained from sweet potato dry powder as a saccharifying enzyme to a processed substance derived from sweetpotato obtained by adding water to and processed by heating sweetpotato, and performing saccharification for 30 to 60 minutes while heating at 60 to 75°C.
